# EUROPEAN PATENT SPECIFICATION

(11) **EP 0 370 508 B1**
(45) Date of publication and mention of the grant of the patent: **02.08.1995**
(21) Application number: 89121672.3
(22) Date of filing: 23.11.1989
(51) Int. Cl.: H01L 41/08

(54) **Ultrasonic actuator**
Ultraschallantrieb
Actionneur à ultrasons

(30) Priority: 25.11.1988 JP 297459/88; 25.11.1988 JP 297460/88
(43) Date of publication of application: 30.05.1990
(73) Proprietor: CASIO COMPUTER COMPANY LIMITED, Shinjuku-ku Tokyo 160 (JP)
(72) Inventor: Shiyoa, Masaharu Pat. Dept., Developm. Div. Hamura, Hamura-machi Nishitama-gun Tokyo 190-11 (JP)
(74) Representative: Strasse, Joachim, Dipl.-Ing.

(56) References cited:
- EP-A- 0 289 734
- DE-A- 1 613 087
- PATENT ABSTRACTS OF JAPAN vol. 9, no. 325 (E-368)(2048) 20 December 1985 & JP-A-60 156 283
- PATENT ABSTRACTS OF JAPAN vol. 10, no. 340 (E-455)(2396) 18 November 1986 & JP-A-61 142 979

## Description

The present invention relates to an ultrasonic actuator adapted for use as a power generating apparatus for, e.g., a miniature motor.

In general, ultrasonic actuators produce ultrasonic oscillations, such as standing waves, composite oscillating waves, progressive waves, etc., in an elastic body by subjecting the elastic body to deflection by means of the elastic motion of a piezoelectric material, such as piezoelectric ceramic. In these ultrasonic actuators, a material point or particle of the elastic body is subjected to an elliptical motion, accompanying the ultrasonic oscillations. If a moving member, e.g., a rotor, is brought into contact with the material point of the elastic body in the elliptical motion, in-contact and noncontact states are alternately established between the rotor and the material point. Thus, the rotor is subjected to rotation corresponding to the moving direction of the material point in the in-contact state.

The ultrasonic actuators have various shapes and structures, depending on the types of ultrasonic oscillations (e.g., standing waves, composite oscillating waves, progressive waves, etc.) applied to the elastic body, the applications of the actuators, etc.

Many of the conventional ultrasonic actuators can however, enjoy only a limited variety of shapes, due to relatively restricted applications, so that they lack in versatility.

If an actuator developed for the purpose of obtaining a rotary motion is used to obain a linear motion, or vice versa, an artificial power transmission mechanism may have to be used, or the actuator may not be applicable at all, or if applicable, may entail a very low efficiency.

JP-A-61-142 979 discloses a "Motor using piezoelectric element" with piezoelectric wave generators in which the plurality of piezoelectric elements are radially and annularly arranged. Further, a flake spline made of thin cup-shaped elastic metal and formed with involute teeth on the outer periphery of a hole, a circular spline formed with teeth having the same pitch as the teeth of the flake spline, but two teeth more on the ring-shaped inner periphery and a piezoelectric element drive circut are provided. A voltage is applied to two piezoelectric elements, which are opposed on the radial line of the generator and are elongated to deform the spline in an elliptical shape to contract with the teeth of the spline. The spline can be rotated by sequentially shifting the voltage application to adjacent sets of elements.

EP-A-0 289 734 discloses "An ultrasonic driving device" with a stator which consists of at least one piezoelectric vibrator between a long metal block and a short metal block which are fixed by means of screws to each other. When a high frequency alternative current voltage is applied to the piezoelectric vibrators, compunded torsional vibration is generated on the end surface and the side surface of the stator. A driven member is engaged on the end surface or the side surface of one of the metal blocks and is driven by the vibration.

It is the object of the invention to provide a power generating apparatus with an ultrasonic actuator with piezoelectric actuator means and electrical control means for driving the piezoelectric actuator means, which is of simple construction and easy to manufacture, especially in very small size.

This object is achieved by providing a tubular body and a piezoelectric actuator means, which includes at least one piezoelectric rod mounted within the tubular body substantially along a diameter of the cross section of the tubular body for actuating the circumferential shape of the tubular body into an elliptical shape.

With this construction, an ultrasonic actuator of high universality is provided which can obtain one or both of rotational and linear motion.

Further details and advantages can be more fully understood from the following detailed description when taken in conjunction with the accompanying drawings, in which:
Fig. 1A is a perspective view showing an outline of an ultrasonic actuator according to a first embodiment of the present invention;
Fig. 1B is a side view of the ultrasonic actuator shown in Fig. 1A;
Fig. 1C is a sectional view of the ultrasonic actuator taken along line A-A of Fig. 1B;
Fig. 2 is a diagram showing a piezoelectric actuator connected to the power supply in the ultrasonic actuator of Fig. 1A;
Fig. 3 is a diagram showing radial displacements caused in a cylindrical vibrator of the ultrasonic actuator of Fig. 1A;
Figs. 4A and 4B are diagrams individually showing distributions of radial and circumferential displacements which accompany an elliptical displacement of the cylindrical vibrator of the ultrasonic actuator of Fig. 1A;
Figs. 5A, 5B and 5C are enlarged views showing general displacements of the cylindrical vibrator of the ultrasonic actuator of Fig. 1A;
Fig. 6 is a diagram showing rotatory motions obtained with use of the ultrasonic actuator of Fig. 1A;
Fig. 7A is a side view of an ultrasonic actuator according to a second embodiment of the present invention, having two piezoelectric actuators;
Fig. 7B is a sectional view of the ultrasonic actuator shown in Fig. 7A;
Fig. 8 is a diagram showing rotatory motions obtained with use of the ultrasonic actuator of Fig. 7A;
Fig. 9 is a diagram showing a linear motion obtained with use of the ultrasonic actuator of Fig. 7A; and
Fig. 10 is a side view showing an ultrasonic actuator according to a third embodiment of the present invention, having a piezoelectric actuator and a metal rod.

Preferred embodiments of the present invention will now be described in detail with reference to the accompanying drawings.

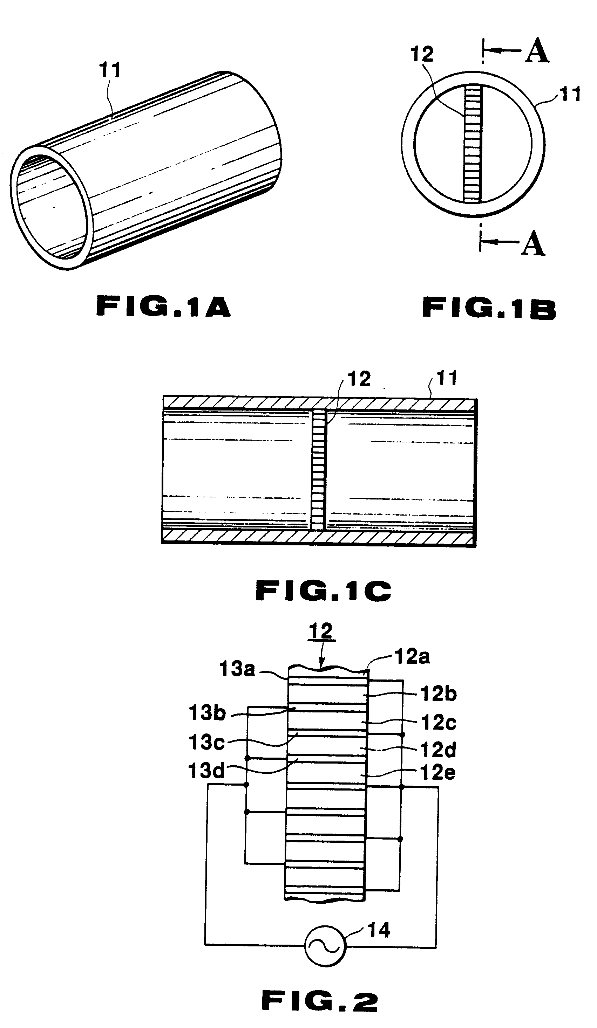

Figs. 1A to 1C show the construction of an ultrasonic actuator according to a first embodiment of the invention, in which Fig. 1A is an external perspective view, Fig. 1B is a side view, and Fig. 1C is a sectional view taken along line A-A of Fig. 1B.

The ultrasonic actuator comprises cylindrical vibrator 11 of aluminum or brass which has an outside diameter of 10.35 mm and a thickness of 0.5 mm, for example. Rod-shaped piezoelectric actuator 12 is disposed in the center of the interior of vibrator 11, with respect to the axial direction thereof, so as to extend along the diameter of the vibrator.

Fig. 2 shows a configuration of piezoelectric actuator 12. In actuator 12, a number of fine piezoelectric ceramic elements 12a, 12b, ..., formed of piezoelectric devices based on PZT (lead zirconate titanate), are stacked in layers with thin electrodes 13a, 13b, ... between them, and two opposite ends of each ceramic element are fixed to the inner peripheral surface of cylindrical vibrator 11 by bonding. In this case, a seat plate of aluminum or brass is interposed between each end of actuator 12 and vibrator 11, and is bonded by means of a relatively rigid bonding agent, e.g., an epoxy-resin-based bonding agent. An AC voltage with a predetermined frequency from power supply unit 14 is applied to electrodes 13a, 13b, ... of piezoelectric actuator 12 so that voltages of opposite phases are applied between adjacent piezoelectric ceramic elements 12a, 12b, .... In this embodiment, the applied voltage is set to 8 Vmax, and its frequency is adjusted to 30 kHz (where cylindrical vibrator 11 is made of aluminum) or 36 kHz (where vibrator 11 is made of brass). These values are subject to changes, depending on the desired driving torque or speed, or the outside diameter or wall thickness of cylindrical vibrator 11.

The following is a description of driving force generating operation of the ultrasonic actuator with the aforementioned construction.

First, if an AC voltage of, e.g., 30 kHz is applied to piezoelectric actuator 12, longitudinal extension and contraction corresponding to the applied voltage frequency are caused in actuator 12.

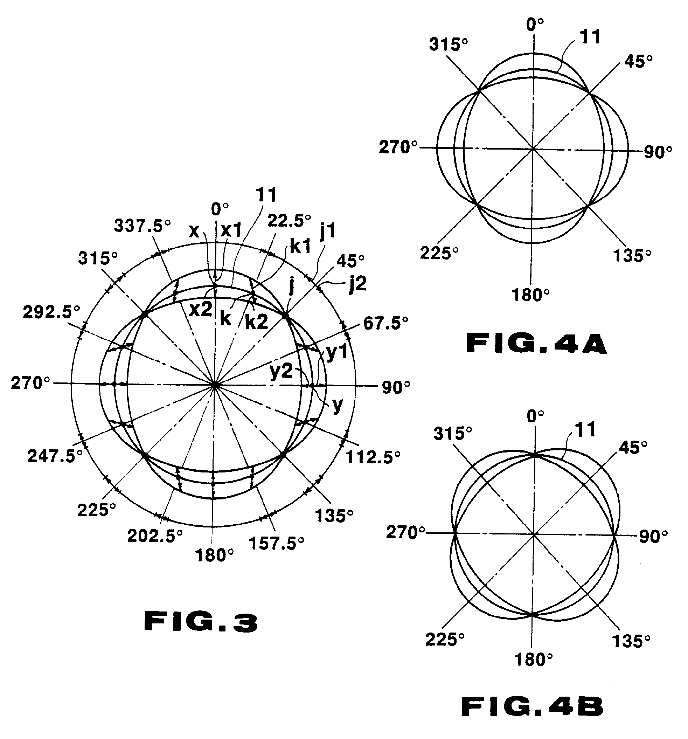

Fig. 3 shows displacements caused in cylindrical vibrator 11 as piezoelectric actuator 12 extends and contracts. In the description to follow, the direction of the vertical center line of the cross section of vibrator 11 is defined as the 0° direction, and the circumference of vibrator 11 is supposed to be marked successively with degrees of several angles in the clockwise direction around the central axis of the vibrator. In Fig. 3, actuator 12 is located so as to extend at 0° (180°) to the vertical direction of vibrator 11. As actuator 12 extends and contracts, elliptical displacements in the vertical direction (0°-180° direction) and the horizontal direction (90°-270° direction) are alternately caused in vibrator 11 in response to the extension and contraction of actuator 12. Thus, when actuator 12 is extended, cylindrical vibrator 11 is elliptically displaced so that its diameter extends by increment x1 in the 0°-180° direction, and contracts by decrement y2 in the 90°-270° direction. When actuator 12 is contracted, on the other hand, vibrator 11 is elliptically displaced so that its diameter extends by increment y1 in the 90°-270° direction, and contracts by decrement x2 in the 0°-180° direction. In this case, vibrator 11 has stationary points in the 45°, 135°, 225°, and 315° directions which never shift their positions in the radial direction despite the aforesaid two elliptical displacements.

If material point x in the 0° or 180° direction is radially displaced by width x1, accompanying the elliptical displacement in the 0°-180° direction, circumferential displacement j1 is caused at each of the stationary points or material points j in the 45°, 135°, 225°, and 315° directions. If material point y in the 90° or 270° direction is radially displaced by width y1, accompanying the elliptical displacement in the 90°-270° direction, circumferential displacement j2 is caused at each of the stationary point or material point j. Thereupon, displacements k1 and k2, equivalent to the combination of the radial and circumferential displacements, are caused at each of material points (e.g., 22.5°, 67.5°, 112.5°, 157.5°, 202.5°, 247.5°, 292.5°, and 337.5°) between material points x and y (0°, 90°, 180°, and 270°) for the maximum radial displacement and material point j (45°, 135°, 225°, and 315°) for the maximum circumferential displacement. If a cylindrical rotor is brought into contact with displacement point k for the combination of the radial and circumferential displacements, it rotates in a direction corresponding to circumferential displacement j1 obtained when material point k is displaced radially outwardly by k1.

Figs. 4A and 4B show distributions of radial and circumferential displacements which accompany the elliptical displacement of cylindrical vibrator 11. The radial displacement, which corresponds to the elliptical displacement of vibrator 11, has its peaks in the 0°, 90°, 180°, and 270° directions, with respect to vibrator 11, and is "0" in the 45°, 135°, 225°, and 315° directions. On the other hand, the circumferential displacement has its peaks in the 45°, 135°, 225°, and 315° directions where the radial displacement is "0," and is "0" in the 0°, 90°, 180°, and 270° directions where the radial displacement has its peaks.

Thus, if the AC voltage is applied to piezoelectric actuator 12 to cause high-frequency extension and contraction, thereby continuously subjecting cylindrical vibrator 11 to two elliptical displacements having their respective major axes in the vertical and horizontal directions, combined displacements which have their respective peaks at intermediate points are caused on circular arcs between the points at 0° and 45°, 45° and 90°, ..., 270° and 315°, and 315° and 0°.

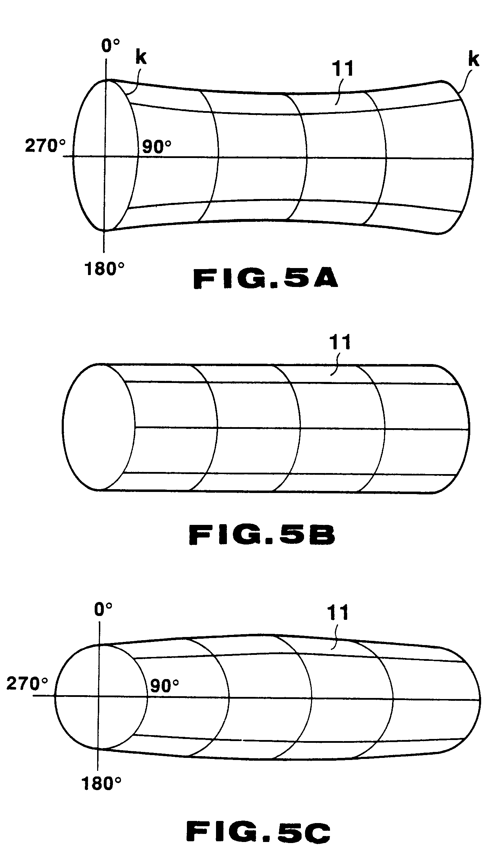

Figs. 5A, 5B, and 5C are enlarged views showing general elliptical displacements of cylindrical vibrator 11. An experiment result indicates that if piezoelectric actuator 12 is located substantially in the center of vibrator 11, with respect to the longitudinal direction thereof, both the elliptical displacements in the vertical direction (0°-180° direction) and the horizontal direction (90°-270° direction) become smaller with distance from the opposite ends of vibrator 11. Thus, a maximum combined displacement with respect to the radial and circumferential directions is obtained with every 45° distance from material point k at 22.5° on the circular arc at each end of cylindrical vibrator 11.

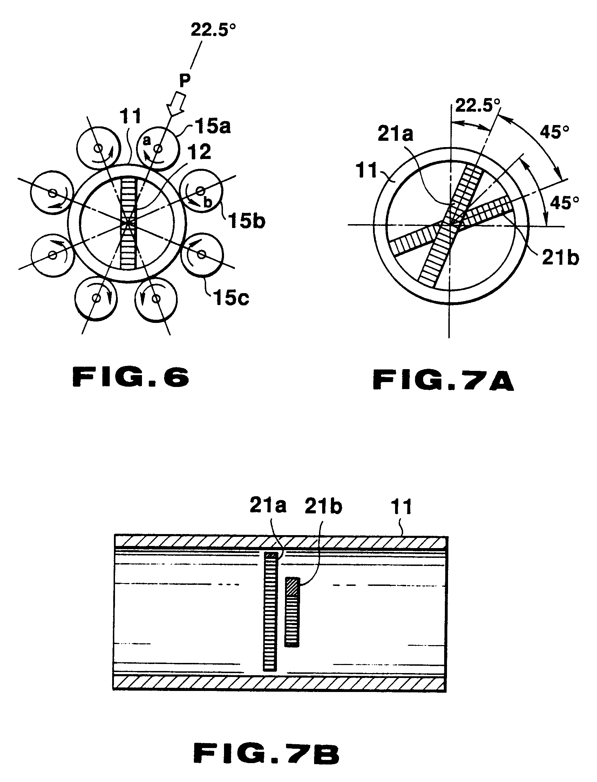

As shown in Fig. 6, therefore, rotatory forces in the direction of arrow a or b, which correspond to the combined displacement with respect to the radial and circumferential directions, can be transmitted to rotors 15a, 15b, ... by bringing the rotors into contact with cylindrical vibrator 11, as indicated by arrow P in Fig. 6, with every 45° distance from the point deviated at 22.5° from the fixed position at which piezoelectric actuator 12 is fixed to vibrator 11.

In the embodiment described above, the elliptical displacements of cylindrical vibrator 11 are caused by means of one piezoelectric actuator 12. Alternatively, however, two piezoelectric actuators 21a and 21b may be used for this purpose, as shown in Figs. 7A and 7B.

Both piezoelectric actuators 21a and 21b are fixedly bonded to the central portion of cylindrical vibrator 11, with respect to the axial direction thereof, so as to extend along the diameter of vibrator 11. For example, first actuator 21a is fixed to the position corresponding to 22.5°, while second actuator 21b is fixed to the position deviated at 45° from first actuator 21a. AC voltages with a phase difference of 180° are applied to two piezoelectric actuators 21a and 21b so that actuators 21a and 21b are extended or contracted in opposite phases. Thereupon, outward extension and inward contraction at the positions corresponding to 22.5° and 67.5°, respectively, and inward contraction and outward extension at the positions corresponding to 22.5° and 67.5°, respectively, are continuously alternately repeated, for example, based on the arc positions of cylindrical vibrator 11 which correspond to the centers of regions of fixation of piezoelectric actuators 21a and 21b. Thus, when first actuator 21a is extended, an outward elliptical displacement is caused which has an upgrade from the 67.5° position toward the 22.5° position, and has its peak at the 0° position. When second actuator 21b is extended, on the other hand, an outward elliptical displacement is caused which has an upgrade from the 22.5° position toward the 67.5° position, and has its peak at the 90° position.

As in the first embodiment, therefore, the elliptical displacements in the 0°-180° direction and the 90°-270° direction, as shown in Fig. 3, can be continuously caused with higher amplitude. Thus, a greater combined displacement with respect to the radial and circumferential directions can be obtained with every 45° distance from the 22.5° position of cylindrical vibrator 11.

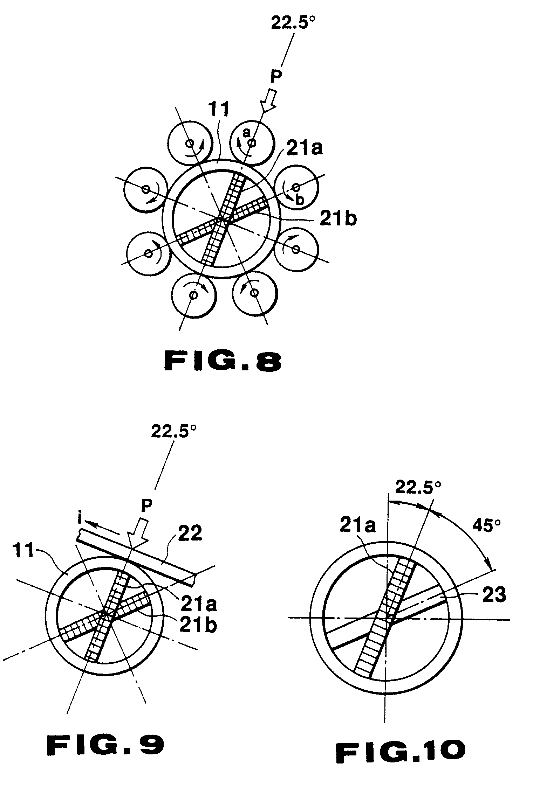

As shown in Fig. 8, therefore, greater rotatory forces in the direction of arrow a or b, which correspond to the combined displacement with respect to the radial and circumferential directions, can be transmitted to rotors 15a, 15b, ... by bringing the rotors into contact with cylindrical vibrator 11, as indicated by arrow P in Fig. 8, with every 45° distance from the 22.5° position of vibrator 11.

In the first and second embodiments (Figs. 1 and 7), rotatory motions of rotors 15a, 15b, ... are obtained from cylindrical vibrator 11. Alternatively, however, linear motion i in a direction corresponding to the circumferential displacement of vibrator 11, which accompanies the outward displacement thereof, may be obtained by bringing planar moving body 22 into contact with vibrator 11, as indicated by arrow P in Fig. 9, at any of radial and circumferential displacement points distributed with every 45° distance from the 22.5° position of vibrator 11.

Alternatively, moreover, one of two piezoelectric actuators 21a and 21b of the second embodiment (Fig. 7) may be replaced with simple metal rod 23, as shown in Fig. 10. In this case, an outward elliptical displacement, which has an upgrade from the 67.5° position toward the 22.5° position and has its peak at the 0° position, and another outward elliptical displacement, which has an upgrade from the 22.5° position toward the 67.5° position and has its peak at the 90° position, are alternately caused when the piezoelectric actuator is extended and contracted, respectively. According to this arrangement, rotatory or linear motions can be obtained as required by the same operation as in the foregoing embodiments.

In the embodiments described above, the figures for the angles are indicated for ease of illustration only, and their values are not limited to the illustrated ones. In the second embodiment (Fig. 7), the angular shift between two piezoelectric actuators 21a and 21b and the phase difference between the voltages applied thereto are adjusted to 45° and 180°, respectively, thereby subjecting cylindrical vibrator 11 to the experimentally largest elliptical displacement. However, vibrator 11 can be subjected to an elliptical displacement even if the angular shift is 0° or any other angle, or if the phase difference between the AC voltages applied to actuators 21a and 21b is adjusted to any other angle than 180°. It is essential only that cylindrical vibrator 11 be able to undergo elliptical deformation.

## Claims

1. A power generating apparatus comprising an ultrasonic actuator with piezoelectric actuator means and electrical control means (14) for driving the piezoelectric actuator means,
- and a tubular body (11), **characterized in** that
- the piezoelectric actuator means include at least one piezoelectric rod (12, 21a, 21b) mounted within the tubular body (11) substantially along a diameter of the cross section of the tubular body for actuating the circumferential shape of the tubular body (11) into an elliptical shape.

2. The power generating apparatus according to claim 1, **characterized in** that the electrical control means (14) for driving the piezoelectric actuator means cause the deformation of the circumferential shape of the tubular body (11) into an elliptical shape intermittently.

3. The power generating apparatus according to claim 1 or 2, **characterized in** that the piezoelectric actuator means comprise a plurality of fine piezoelectric ceramic elements (12a, 12b, 12c, ...).

4. The power generating apparatus according to claim 3, **characterized in** that the fine piezoelectric ceramic elements (12a, 12b, 12c, ...) are formed of piezoelectric devices based on PZT (lead, zirconate, titanate) and are stacked in layers with thin electrodes (13a, 13b, 13c, ...) between them.

5. The power generating apparatus according to at least one of the preceding claims, **characterized in** that said electrical control means (14) include voltage applying means for applying voltage to the piezoelectric actuator means (12, 21a, 21b).

6. The power generating apparatus according to at least one of the preceding claims, **characterized in** that said piezoelectric actuator means include two piezoelectric rods (21a, 21b) arranged so as to extend and contract at an angle of 45° to each other.

7. The power generating apparatus according to at least one of the preceding claims, **characterized in** that said piezoelectric actuator means (12, 21a, 21b) are located substantially in the center of the tubular body (11) with respect to the axial direction thereof.

8. The power generating apparatus according to at least one of the preceding claims, **characterized by** at least one engaging means (15a, 15b, ... 22) located in contact with the outer peripheral surface of the tubular body (11) and driven by said body (11).

9. The power generating apparatus according to claim 8, **characterized in** that said engaging means (15a, 15b, ...) is located in contact with that portion of the tubular body (11) at an angular distance of 22.5° from the fixed position at which the piezoelectric atuator means (12, 21a, 21b) is fixed to said body.

10. The power generating apparatus according to claim 8, **characterized in** that said engaging means (22) is located in contact with that portion of the tubular body (11) at which the piezoelectric actuator means (12, 21a, 21b) is fixed to said body.

11. The power generating apparatus according to at least one of claims 8 to 10, **characterized in** that said engaging means (15a, 15b, ... 22) are located in contact with that portion of the tubular body (11) near each axial end thereof.

12. The power generating apparatus according to at least one of claims 8 to 11, **characterized in** that said engaging means (15a, 15b, ... 22) are located at a distance of 45° each from each other.

13. The power generating apparatus according to at least one of claims 8 to 12, **characterized in** that said engaging means include a rotating body (15a, 15b ...) driven in rotation by said tubular body (11).

14. The power generating apparatus according to at least one of claims 8 to 13, **characterized in** that said engaging means include a planar body (22) driven in linear motion by said body (11).

15. The power generating apparatus according to at least one of claims 6 to 14, **characterized in** that AC voltages with a phase difference of 180° are applied to the two piezoelectric actuator means (21a, 21b).

16. The power generating apparatus according to at least one of claims 6 to 15, **characterized in** that one of the two piezoelectric actuator means (21a, 21b) is replaced by a simple metal rod (23).

## Patentansprüche

1. Stromerzeugungsvorrichtung mit einem Ultraschallstellglied mit piezoelektrischen Stellgliedvorrichtungen und elektrischen Steuervorrichtungen (14) zum Treiben der piezoelektrischen Stellgliedvorrichtungen, sowie einem rohrförmigen Körper (11),
**dadurch gekennzeichnet**, daß
- die piezoelektrischen Stellgliedvorrichtungen mindestens einen piezoelektrischen Stab (12, 21a, 21b) aufweisen, der im Inneren des rohrförmigen Körpers (11) im wesentlichen entlang eines Durchmessers des Querschnitts des rohrförmigen Körpers befestigt ist, um die Umfangsform des rohrförmigen Körpers (11) in eine elliptische Form zu stellen.

2. Stromerzeugungsvorrichtung nach Anspruch 1,
**dadurch gekennzeichnet**, daß
die elektrischen Steuervorrichtungen (14) zum Treiben der piezoelektrischen Stellgliedvorrichtungen intermittierend die Verformung der Umfangsform des rohrförmigen Körpers (11) zu einer elliptischen Form bewirken.

3. Stromerzeugungvorrichtung nach Anspruch 1 oder 2,
**dadurch gekennzeichnet**, daß
die piezoelektrischen Stellgliedvorrichtungen eine Mehrzahl feiner piezoelektrischer Keramikelemente (12a, 12b, 12c, ...) umfassen.

4. Stromerzeugungsvorrichtung nach Anspruch 3,
**dadurch gekennzeichnet**, daß
die feinen piezoelektrischen Keramikelemente (12a, 12b, 12c, ...) aus piezoelektrischen Bauteilen auf der Grundlage von PZT (Blei, Zirkonat, Titanat) bestehen und unter Zwischenfügung dünner Elektroden (13a, 13b, 13c, ...) übereinandergeschichtet sind.

5. Stromerzeugungsvorrichtung nach wenigstens einem der voranstehenden Ansprüche,
**dadurch gekennzeichnet**, daß
die elektrischen Steuervorrichtungen (14) Spannungsanlegevorrichtungen zum Anlegen einer Spannung an die piezoelektrischen Stellgliedvorrichtungen (12, 21a, 21b) umfassen.

6. Stromerzeugungsvorrichtung nach wenigstens einem der voranstehenden Ansprüche,
**dadurch gekennzeichnet**, daß
die piezoelektrischen Stellgliedvorrichtungen zwei piezoelektrische Stäbe (21a, 21b) umfassen, die derart angeordnet sind, daß sie sich unter einem Winkel von 45° zueinander ausdehnen bzw. zusammenziehen.

7. Stromerzeugungsvorrichtung nach wenigstens einem der voranstehenden Ansprüche,
**dadurch gekennzeichnet**, daß
die piezoelektrischen Stellgliedvorrichtungen (12, 21a, 21b) im wesentlichen im Zentrum des rohrförmigen Körpers (11) bezüglich dessen axialer Richtung angeordnet sind.

8. Stromerzeugungsvorrichtung nach wenigstens einem der voranstehenden Ansprüche,
**gekennzeichnet durch**
mindestens eine Eingriffsvorrichtung (15a, 15b, ... 22), die in Kontakt mit der äußeren Umfangsoberfläche des rohrförmigen Körpers (11) angeordnet ist und vom Körper (11) angetrieben wird.

9. Stromerzeugungsvorrichtung nach Anspruch 8,
**dadurch gekennzeichnet**, daß
die Eingriffsvorrichtung (15a, 15b, ...) sich in Kontakt mit demjenigen Abschnitt des rohrförmigen Körpers (11) unter einem Winkelabstand von 22,5° von der festen Position befindet, an der die piezoelektrischen Stellgliedvorrichtungen (12, 21a, 21b) am Körper befestigt ist.

10. Stromerzeugungsvorrichtung nach Anspruch 8,
**dadurch gekennzeichnet**, daß
die Eingriffsvorrichtung (22) sich in Kontakt mit demjenigen Abschnitt des rohrförmigen Körpers (11) befindet, an dem die piezoelektrischen Stellgliedvorrichtungen (12, 21a, 21b) am Körper befestigt sind.

11. Stromerzeugungsvorrichtung nach wenigstens einem der Ansprüche 8 bis 10,
**dadurch gekennzeichnet**, daß
die Eingriffsvorrichtungen (15a, 15b, ... 22) sich in Kontakt mit demjenigen Abschnitt des rohrförmigen Körpers (11) angeordnet sind, der sich in der Nähe eines jeden ihrer axialen Enden befindet.

12. Stromerzeugungsvorrichtung nach wenigstens einem der Ansprüche 8 bis 11,
**dadurch gekennzeichnet**, daß
die Eingriffsvorrichtungen (15a, 15b, ... 22) in einem Abstand von 45° zueinander angeordnet sind.

13. Stromerzeugungsvorrichtung nach wenigstens einem der Ansprüche 8 bis 12,
**dadurch gekennzeichnet**, daß
die Eingriffsvorrichtungen einen Drehkörper (15a, 15b, ...) umfassen, der in Drehung vom rohrförmigen Körper (11) angetrieben wird.

14. Stromerzeugungsvorrichtung nach wenigstens einem der Ansprüche 8 bis 13,
**dadurch gekennzeichnet**, daß
die Eingriffsvorrichtungen einen ebenen Körper (22) aufweisen, der in linearer Bewegung vom Körper (11) angetrieben wird.

15. Stromerzeugungsvorrichtung nach wenigstens einem der Ansprüche 6 bis 14,
**dadurch gekennzeichnet**, daß
Wechselspannungen mit einem Phasenunterschied von 180° an die beiden piezoelektrischen Stellgliedvorrichtungen (21a, 21b) angelegt werden.

16. Stromerzeugungsvorrichtung nach wenigstens einem der Ansprüche 6 bis 15,
**dadurch gekennzeichnet**, daß
eine der beiden piezoelektrischen Stellgliedvorrichtungen (21a, 21b) durch einen einfachen Metallstab (23) ersetzt ist.

## Revendications

1. Appareil de production de puissance, comprenant un actionneur à ultrasons avec des moyens d'actionnement piézoélectriques et des moyens de commande électriques (14) pour piloter les moyens d'actionnement piézoélectriques, et un corps tubulaire (11), caractérisé en ce que les moyens d'actionnement piézoélectriques comprennent au moins une tige piézoélectrique (12, 21a, 21b) montée à l'intérieur du corps tubulaire (11) sensiblement le long d'un diamètre de la section transversale du corps tubulaire pour actionner la forme circonférentielle du corps tubulaire (11) sous une forme elliptique.

2. Appareil de production de puissance selon la revendication 1, caractérisé en ce que les moyens de commande électriques (14) pour piloter les moyens d'actionnement piézoélectriques provoquent la déformation de la forme circonférentielle du corps tubulaire (11) par intermittence sous une forme elliptique.

3. Appareil de production de puissance selon l'une ou l'autre des revendications 1 et 2, caractérisé en ce que les moyens d'actionnement piézoélectriques comprennent une pluralité d'éléments fins en céramique piézoélectriques (12a, 12b, 12c, ...).

4. Appareil de production de puissance selon la revendication 3, caractérisé en ce que les éléments fins en céramique piézoélectriques (12a, 12b, 12c, ...) sont formés de composants piézoélectriques basés sur du PZT (plomb, zirconate, titanate) et sont empilés en couche avec des électrodes minces (13a, 13b, 13c, ...) entre eux.

5. Appareil de production de puissance selon l'une au moins des revendications précédentes, caractérisé en ce que lesdits moyens de commande électriques (14) comprennent des moyens d'application de tension afin d'appliquer une tension aux moyens d'actionnement piézoélectriques (12, 21a, 21b).

6. Appareil de production de puissance selon l'une au moins des revendications précédentes, caractérisé en ce que lesdits moyens d'actionnement piézoélectriques comprennent deux tiges piézoélectriques (21a, 21b) agencées de manière à se dilater et se contracter sous un angle de 45° l'une par rapport à l'autre.

7. Appareil de production de puissance selon l'une au moins des revendications précédentes, caractérisé en ce que lesdits moyens d'actionnement piézoélectriques (12, 21a, 21b) sont placés sensiblement au centre du corps tubulaire (11) par rapport à la direction axiale de celui-ci.

8. Appareil de production de puissance selon l'une au moins des revendications précédentes, caractérisé en ce qu'il comprend au moins un moyen d'engagement (15a, 15b, ... 22) situé en contact avec la surface périphérique extérieure du corps tubulaire (11) et entraîné par ledit corps (11).

9. Appareil de production de puissance selon la revendication 8, caractérisé en ce que ledit moyen d'engagement (15a, 15b, ...) est situé en contact avec la partie du corps tubulaire (11) qui est à une distance angulaire de 22,5° depuis la position fixe à laquelle lesdits moyens d'actionnement piézoélectriques (12, 21a, 21b) sont fixés audit corps.

10. Appareil de production de puissance selon la revendication 8, caractérisé en ce que ledit moyen d'engagement (22) est situé en contact avec la partie du corps tubulaire (11) à laquelle les moyens d'actionnement piézoélectriques (12, 21a, 21b) sont fixés audit corps.

11. Appareil de production de puissance selon l'une au moins des revendications 8 à 10, caractérisé en ce que ledit moyen d'engagement (15a, 15b, ... 22) est situé en contact avec la partie du corps tubulaire (11) voisine de chaque extrémité axiale de celui-ci.

12. Appareil de production de puissance selon l'une au moins des revendications 8 à 11, caractérisé en ce que lesdits moyens d'engagement (15a, 15b, ... 22) sont situés chacun à une distance de 45° les uns des autres.

13. Appareil de production de puissance selon l'une au moins des revendications 8 à 12, caractérisé en ce que ledit moyen d'engagement comprend un corps rotatif (15a, 15b, ...) entraîné en rotation par ledit corps tubulaire (11).

14. Appareil de production de puissance selon l'une au moins des revendications 8 à 13, caractérisé en ce que ledit moyen d'engagement comprend un corps plan (22) entraîné en mouvement linéaire par ledit corps (11).

15. Appareil de production de puissance selon l'une au moins des revendications 6 à 14, caractérisé en ce que des tensions alternatives avec un décalage de phase de 180° sont appliquées aux deux moyens d'actionnement piézoélectriques (21a, 21b).

16. Appareil de production de puissance selon l'une au moins des revendications 6 à 15, caractérisé en ce que l'un des deux moyens d'actionnement piézoélectriques (21a, 21b) est remplacé par une simple tige métallique (23).
